# EUROPEAN PATENT APPLICATION

(11) **EP 4 404 423 A1**
(43) Date of publication of application: **24.07.2024**
(21) Application number: 23186526.2
(22) Date of filing: 19.07.2023
(51) Int. Cl.: H02J 7/02

(54) **CHARGING PILE, POWER MODULE, AND METHOD FOR CONTROLLING THE SAME**

(30) Priority: 22.12.2022 CN 202211655927
(71) Applicant: Sungrow Power Supply Co., Ltd., Hefei, Anhui 230088 (CN)
(72) Inventor: PENG, Xuanzhe, Hefei (CN); PAN, Zijiao, Hefei (CN); TAN, Enzan, Hefei (CN); LIANG, Yilong, Hefei (CN)
(74) Representative: Zacco Norway AS

(57) **Abstract**

A charging pile, a power module, and a method for controlling the same. In response to receiving a signal of operation, samples of an input voltage of three relays corresponding to three phases, respectively, at an input of a power module are acquired to determine whether a line voltage between inputs of two of the three relays is within a predetermined voltage range. The two relays are closed to pre-charge a bus capacitor in a converting circuity of the power module, in response to determining that the line voltage is within the predetermined voltage range. The predetermined voltage range comprises zero voltage, such that each relay can be closed when a voltage at its input is close to zero. An impulse current is decreased without help of an arc quenching device, thereby saving an internal space of the charging pile.

## Description

This application claims the priority to Chinese Patent Application No. 202211655927.X, titled "CHARGING PILE, POWER MODULE, AND METHOD FOR CONTROLLING THE SAME", filed on December 22, 2022 with the China National Intellectual Property Administration, the content of which is incorporated herein by reference.

### TECHNICAL FIELD

The present disclosure relates to the technical field of power electronics, and in particular to a charging pile, a power module, and a method for controlling the power module.

### BACKGROUND

For the sake of safety and maintenance, it is necessary to connect a three-phase alternating-current (AC) contactor at an input end of a power module of a conventional charging pile. The three-phase AC contactor is located between a mains supply and the power module, and is closed and opened under control of a communication control unit (CCU). When the three-phase AC contactor is closed, the power module is connected to the mains supply, and starts operating to output DC. When the three-phase AC contactor is opened, the power module is disconnected from the mains supply, and cannot output direct current.

An impulse current is likely to occur when the three-phase AC contactor is closed to pre-charge a bus capacitor in the power module, and an arc quenching device needs to be provided in the three-phase AC contactor to avoid contact adhesion. Thereby, a volume of the three-phase AC contactor is increased, which occupies a large space in the charging pile.

### SUMMARY

In view of the above, a charging pile, a power module, and a method for controlling the power module are provided according to embodiments of the present disclosure. A time instance at which a relay is closed is accurately controlled to decrease an impulse current, and hence an internal space of the charging pile is saved.

In order to achieve the above objective, following technical solutions are provided herein.

In a first aspect, a method for controlling a power module is provided, comprising: acquiring, in response to receiving a signal of operation, samples of an input voltage of three relays which correspond to three phases, respectively, at an input of a power module; determining, according to the samples of the input voltage, whether a line voltage is within a predetermined voltage range comprising zero voltage, where the line voltage is between inputs of two relays of the three relays; and closing the two relays to pre-charge a bus capacitor in a converting circuity of the power module, in response to determining that the line voltage is within the predetermined voltage range.

In an embodiment, an output of a first relay of the three relays is connected to a corresponding port of an input of the converting circuit via a pre-charge resistor, and outputs of a second relay and a third relay of the three relays are directly connected to corresponding ports, respectively, of the input of the converting circuit. Determining whether the line voltage is within the predetermined voltage range comprises: determining whether the line voltage between an input of the first relay and an input of the second relay is within the predetermined voltage range.

In an embodiment, after closing the two relays, the method further comprises: closing a remaining relay, which is other than the two relays, among the three relays and a pre-charge switch, which is connected in parallel with the pre-charge resistor, in response to pre-charging on the bus capacitor being completed.

In an embodiment, closing the remaining relay and the pre-charge switch comprises: determining, according to the samples of the input voltage, whether a phase voltage at an input of the remaining relay is within the predetermined voltage range; and closing the remaining relay and the pre-charge switch, in response to determining that the phase voltage is within the predetermined voltage range.

In an embodiment, after closing the two relays, the method further comprises: waiting for a first predetermined period in which the pre-charging on the bus capacitor is completed.

In an embodiment, after closing the third relay and the pre-charge switch, the method further comprises: determining, according to the samples of the input voltage and samples of an alternating-current (AC) input voltage of the converting circuit, whether a voltage across each of the three relays is smaller than a first predetermined voltage or greater than a second predetermined voltage, where the second predetermined voltage is greater than the first predetermined voltage; and for each of the three relays, determining said relay is normally closed in response to the voltage being smaller than the first predetermined voltage, and determining said relay is not normally closed in response to the voltage being greater than the second predetermined voltage.

In an embodiment, after receiving the signal of operation and before acquiring the samples of the input voltage, the method further comprises: waiting for a second predetermined period to stabilize power supplied to a power controller in the power module and stabilize operation of a phase-locked loop in the power controller.

In an embodiment, after closing the remaining relay and the pre-charge switch and before determining whether the voltage is smaller than the first predetermined voltage or greater than the second predetermined voltage, the method further comprises: waiting for a third predetermined period.

In an embodiment, the method further comprises: opening each of the three relays and the pre-charge switch, in response to receiving a signal of stopping.

In an embodiment, after opening each of the three relays and the pre-charge switch, the method further comprises: determining, according to the samples of the input voltage and samples of an AC input voltage of the converting circuit, whether a voltage across each of the three relays is smaller than a first predetermined voltage or greater than a second predetermined voltage, where the second predetermined voltage is greater than the first predetermined voltage; and for each of the three relays, determining said relay is normally opened in response to the voltage being greater than the second predetermined voltage, and determining said relay is not normally opened in response to the voltage being smaller than the first predetermined voltage.

In an embodiment, after opening each of the three relays and the pre-charge switch and before determining whether the voltage is smaller than the first predetermined voltage or greater than the second predetermined voltage, the method further comprises: waiting for a fourth predetermined period.

In a second aspect, a power module is provided according to embodiments of the present disclosure, comprising: a power controller, a pre-charger, a converting circuit, a first AC voltage collector, and three relays corresponding to three phases, respectively, where: an input of each of the three relays is connected to an input interface for the corresponding phase of the power module; an output of each of the three relays is connected to an input of the converting circuit via the pre-charger; an output of the converting circuit is connected to an output interface of the power module; the first AC voltage collector is configured acquire samples of an input voltage of the three relays, and output the samples of the input voltage to the power controller; the pre-charger, the converting circuit, and the three relays are controlled by the power controller; and the power controller is configured to implement any foregoing method in the first aspect.

In an embodiment, the pre-charger comprises a pre-charge resistor and a pre-charge switch, where the pre-charge resistor and the pre-charge switch are connected in parallel between one of the three phases and a corresponding port of the input of the converting circuit.

In an embodiment, the power module further comprises a second AC voltage collector, which is configured to acquire samples of an AC voltage at the input of the converting circuit, and output the samples of the AC voltage to the power controller.

In an embodiment, the converting circuit comprises an alternating-current-to-direct-current (AC/DC) circuit and at least one direct-current-to-direct-current (DC/DC) circuit, where: an AC side of the AC/DC circuit serves as the input of the converting circuit; the AC/DC circuit is connected to an input of the at least one DC/DC circuit via a direct current bus; a bus capacitor is connected between a positive line and a negative line of the DC bus; and an output of the at least one DC/DC circuit serves as the output of the converting circuit.

In a third aspect, a charging pile is provided, comprising a communication control unit (CCU), at least one charging gun, and any foregoing power module in the second aspect, where: the input interface of the power module is configured to receive power from a mains supply; the output interface of the power module is connected to an input of the charging gun; and the CCU is configured to communicate with the power controller in the power module.

In the method according to embodiments of the present disclosure, after the signal of operation is received, the samples of the input voltage of the three relay corresponding to the three phases, respectively, at an input side of the power module are required to determine whether the line voltage between the inputs of two of the three relays is within the predetermined voltage range. The two relays are closed to pre-charge the bus capacitor in the converting circuit of the power module, in response to determining that the line voltage is within the predetermined voltage range. Since the predetermined voltage range comprises zero voltage, the relays can be closed at a time instance when the line voltage applied between them approximates zero. Thereby, the impulse current can be decreased without help of an arc quenching device, reducing occupation of an inner space of a charging pile.

### BRIEF DESCRIPTION OF THE DRAWINGS

For clearer illustration of the technical solutions according to embodiments of the present disclosure or conventional techniques, hereinafter briefly described are the drawings to be applied in embodiments of the present disclosure or conventional techniques. Apparently, the drawings in the following descriptions are only some embodiments of the present disclosure, and other drawings may be obtained by those skilled in the art based on the provided drawings without creative efforts.
Figure 1 is a schematic structural diagram of a system of a charging pile in conventional technology.
Figure 2 is a schematic waveform of line voltages of a three-phase mains supply according to an embodiment of the present disclosure.
Figure 3 is a flowchart of a method for controlling a power module according to an embodiment of the present disclosure.
Figure 4 is a flowchart of a method for controlling a power module according to another embodiment of the present disclosure.
Figure 5 is a schematic structural diagram of a power module according to an embodiment of an embodiment of the present disclosure.
Figure 6a and Figure 6b are flowcharts of a method for controlling power module according to an embodiment of the present disclosure.
Figure 7 is a schematic structural diagram of a power module according to an embodiment of the present disclosure.

### DETAILED DESCRIPTION OF THE EMBODIMENTS

Hereinafter technical solutions in embodiments of the present disclosure are described clearly and completely in conjunction with the drawings in embodiments of the present closure. Apparently, the described embodiments are only some rather than all of the embodiments of the present disclosure. Any other embodiments obtained based on the embodiments of the present disclosure by those skilled in the art without any creative effort fall within the scope of protection of the present disclosure.

Herein the terms such as "include", "comprise" or any other variants thereof means to be non-exclusive. Therefore, a process, a method, an article or a device including a series of elements include not only the disclosed elements but also other elements that are not clearly enumerated, or further include inherent elements of the process, the method, the article or the device. Unless expressively limited, the statement "including a..." does not exclude the case that other similar elements may exist in the process, the method, the article or the device other than enumerated elements.

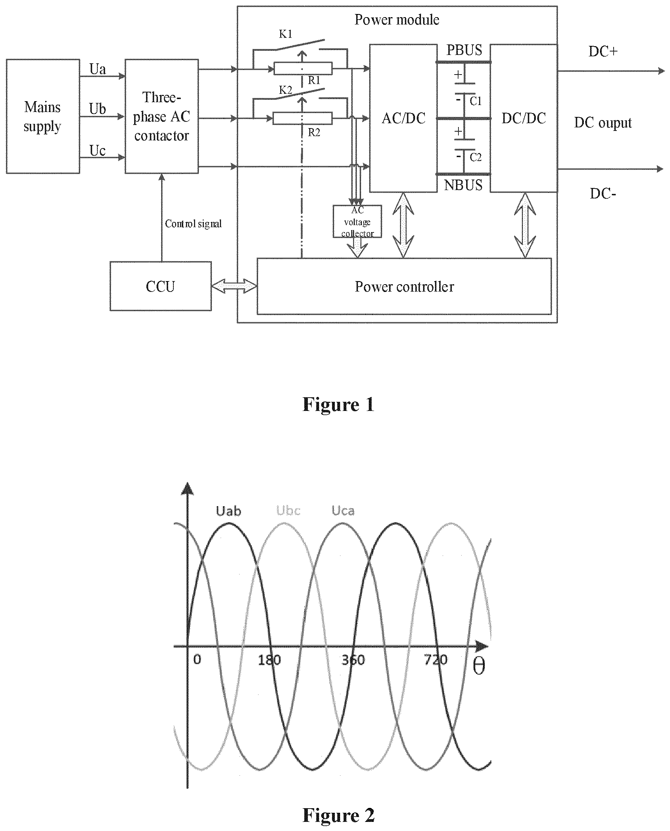

Figure 1 shows a schematic structural diagram of a system of a charging pile which comprises a conventional three-phase alternating current (AC) contactor. A mains supply is connected to a power module via the three-phase AC contactor. During an initial power-up of the whole system, a bus capacitor (comprising C1 and C2) are directly charged by the mains supply when the three-phase AC contactor is closed. Since an initial voltage across the bus capacitor is 0, there is a large voltage difference ΔU between the mains supply and the bus capacitor (of which a capacitance is C). According to a dynamic characteristic of the capacitor which follows Δi = C(ΔU/Δt), a large impulse current Δi is inputted into the power, which may damage devices.

Pre-charge resistors R1 and R2 may be connected to two phases, respectively, of an AC input of the power module, and two pre-charge relays K1 and K2 are connected in parallel with the two pre-charge resistors, respectively. When pre-charge on the bus capacitors is completed, a power controller transmits a signal to close contacts of the two pre-charge relays K1 and K2 and thus short-circuits the two pre-charge resistors R1 and R2. Thereby, it is prevented that the pre-charge resistors consumes a lot of power during normal operation.

Instantaneous line voltages Uab, Ubc and Uca of the AC mains supply are always varying, as shown in Figure 2. When the three-phase AC contactor as shown in Figure 1 is closed, the line voltages may be at an arbitrary moment of a period. A charging current of the bus capacitor corresponding to a peak line voltage is obviously greater than that corresponding to zero line voltage. It is necessary to provide an arc quenching device for the delays corresponding to three phases, such that the three-phase AC contactor as shown in Figure 1 can withstand a large charging current without causing contact adhesion at the delay of any phase. Thereby, the three-phase AC The contactor is bulky and occupies a large space in the charging pile.

In view of the above, a method for controlling a power module is provided according to an embodiment of the present disclosure. A time instance at which a relay is closed is accurately controlled to decrease an impulse current, and hence an internal space of the charging pile is saved.

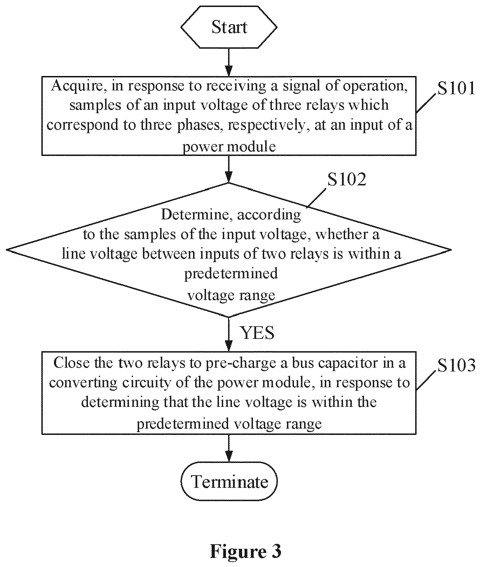

As shown in Figure 3, the method for controlling the power module comprises steps S101 to S103.

In step S101, samples of an input voltage of three relays which correspond to three phases, respectively, at an input of a power module are acquired in response to receiving a signal of operation.

In practice, an AC voltage collector may be provided at an input side of the three relays, so as to collect the samples of the input voltage and output the samples to a power controller. The power controller may use an internally integrated AD sampler to sample a voltage at the main-supply side the three relays. The step S101 may be performed in real time or periodically, which depends on a specific application scenario. Both manners fall within a scope of the present disclosure.

In step S102, it is determined, according to the samples of the input voltage, whether a line voltage is within a predetermined voltage range comprising zero voltage, where the line voltage is between inputs of two relays of the three relays.

As an example, the predetermined voltage range comprising zero voltage may be a voltage range centered on zero. Upper and lower limits of the predetermined voltage range may be determined according to a specific application scenario, which is not limited herein.

The power controller may extract a phase of an AC voltage (that is, an angle θ of phase-locking) via a three-phase phase-locked-loop (PLL) algorithm. Then, it is determined according to the AC voltage phase whether one line voltage (such as Uab) is within the predetermined voltage range.

In a case that the line voltage is within the predetermined voltage range, the process proceeds to step S103.

In step S103, the two relays are closed to pre-charge a bus capacitor in a converting circuity of the power module.

The power controller issues a control instructions for closing the two relays corresponding to the line voltage (for example, relays of phase A and phase B, which corresponding to Uab) only when the line voltage is close to zero. Theoretically, zero impact current can be achieved.

Herein the method for controlling the power module utilizes the forgoing scheme to close the relays at a time instance when the line voltage applied between them approximates zero. Thereby, the impulse current can be decreased without help of an arc quenching device, reducing occupation of an inner space of a charging pile.

As shown in Figure 1, an alternating current flowing through any two phases would pass at least one pre-charge resistor. Correspondingly, in the step S102, the line voltage subject to determination may be between an arbitrary pair of phases. Specifically, the line voltage may be the one which enters the predetermined voltage range earliest from a current time instance. A manner of selecting the line voltage may depend on a specific application scenario and is not limited herein.

In an embodiment, only a two-phase alternating current is used to pre-charge the bus capacitor, and hence one phase pre-charge resistor can be omitted. That is, the input of one relay (i.e., a first relay) is connected to a corresponding port of an input end of the converting circuit via the pre-charge resistor, and the inputs of the other two relays (i.e., a second relay and a third relay) are directly connected to the corresponding ports of the input end of the converting circuit.

In such case, the step S102 comprises a following step. It is determined whether the line voltage between the input of the first relay and the input of the second relay (or the third relay) is within the predetermined voltage range.

It is assumed that the first relay corresponds to phase A, the second relay corresponds to phase B, and the third relay corresponds to phase C, and the step S102 is as follows. It is determined whether the line voltage between the input of the first relay corresponding to phase A and the input of another phase (e.g., the second relay corresponding phase B or the third relay corresponding to phase C) is within the predetermined voltage range.

Accordingly, the first relay and the second relay are closed under control for pre-charging the bus capacitance, when the line voltage between the input of the first relay corresponding to phase A and the input of another phase (e.g., the second relay corresponding phase B) is within the predetermined voltage range.

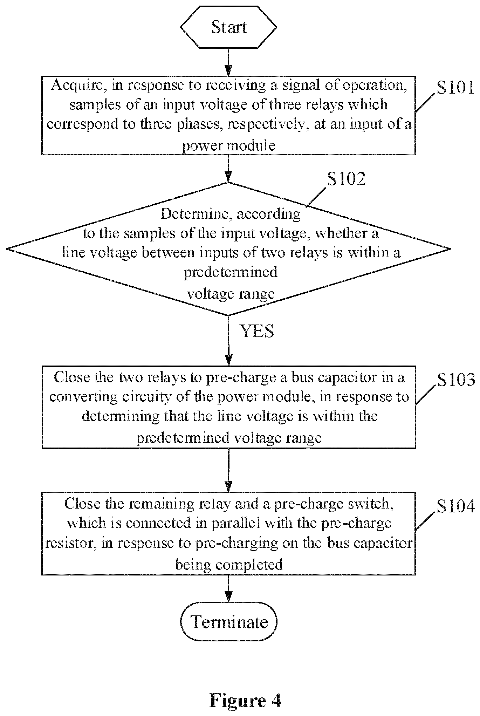

Moreover, after the step S103, the method may further comprise step S104, as shown in Figure 4.

In step S104, the remaining relay and a pre-charge switch, which is connected in parallel with the pre-charge resistor, are closed in response to pre-charging on the bus capacitor being completed.

Moreover, in order to reduce an impulse current generated due to closing the last relay, the step S104 may comprise following steps. It is determined, according to the samples of the input voltage acquired in real time or periodically in the step S101, whether a phase voltage at an input of the remaining relay is within the predetermined voltage range. The remaining relay and the pre-charge switch are closed in response to determining that the phase voltage is within the predetermined voltage range.

Similar to the afore-mentioned embodiment, a control instruction is issued to close the remaining relay (e.g., the third relay corresponding phase C) and pre-charge switch, when the pre-charging of the bus capacitor is completed and the power controller calculates the phase voltage of the remaining phase (e.g., phase C) to be close to 0 through the three-phase PLL algorithm. After the remaining relay is closed, the three-phase alternating current is transmitted from the mains supply to the converting circuit, and thereby the converting circuit can operate normally. After the pre-charge switch is closed, the pre-charge resistor can be bypassed, which reduces power consumption of normal operation.

An additional voltage collector may be provided for power controller, such that the power controller can determine whether the pre-charging on the bus capacitor is completed based on a voltage on a direct-current (DC) bus. In an embodiment, a delay such as 100ms may be configured after the step S 103, so as to ensure that the voltage on the DC bus can reach a value of pre-charge. That is, after the step S103, a first predetermined period in which the pre-charging on the bus capacitor is completed is waited. Thereby, the additional voltage collector can be saved.

On a basis of the foregoing embodiments, samples of voltages at an input terminal and an output terminal, respectively, of each relay may be acquired and compared, in order to detect a fault of such relay.

In an embodiment, after the step S104, the method further comprise following steps. It is determined according to the samples of the input voltage and samples of an AC input voltage of the converting circuit (i.e., of an AC voltage at the input of the converting circuit), whether a voltage across each of the three relays is smaller than a first predetermined voltage or greater than a second predetermined voltage. The second predetermined voltage is greater than the first predetermined voltage. For example, the second predetermined voltage may be 100V, and the first predetermined voltage may be 5V, which is not limited herein. For each of the three relays, the relay is determined to be normally closed in response to the voltage being smaller than the first predetermined voltage, and is determined to be not normally closed in response to the voltage being greater than the second predetermined voltage.

Herein a fault of closing may be detected for each relay. When the fault is detected, the power controller may report the fault to a host computer via a communication port of the power controller. Thereby, intelligent diagnosis of the fault is implemented, improving a degree of automation.

After receiving the signal of operation, the control method may further comprise a following step. A second predetermined period, such as 200ms, is waited to stabilize power supplied to the power controller (for example, a chip in the power controller) in the power module and stabilize operation of a phase-locked loop in the power controller. Afterwards, the process proceeds to the step S101. Moreover, after the step S103, the method may further comprise a following step. A third predetermined period, such as 200ms, is waited to stabilize effective voltages at the input terminal and the output terminal, respectively, of each relay. Afterwards, the process proceeds to the step of determining whether the voltage across each of the three relays is smaller than the first predetermined voltage or greater than the second predetermined voltage.

On a basis of the forgoing embodiments, the method may further comprise a following step at any time instance during the process. Each of the three relays and the pre-charge switch is opened in response to receiving a signal of stopping.

Moreover, after opening each of the three relays and the pre-charge switch, the method may comprise following steps. It is determined according to the samples of the input voltage and the samples of the AC input voltage of the converting circuit, whether a voltage across each of the three relays is smaller than a first predetermined voltage or greater than a second predetermined voltage. The second predetermined voltage is greater than the first predetermined voltage. For example, the second predetermined voltage may be 100V, and the first predetermined voltage may be 5V, which is not limited herein. For each of the three relays, the relay is determined to be normally opened in response to the voltage being greater than the second predetermined voltage, and is determined to be not normally closed in response to the voltage being smaller than the first predetermined voltage.

Herein a fault of opening may be detected for each relay. When the fault is detected, the power controller may report the fault to a host computer via a communication port of the power controller. Thereby, intelligent diagnosis of the fault is implemented, improving a degree of automation.

Moreover, after opening each of the three relays and the pre-charge switch, the method may comprise a following step. A fourth predetermined period, such as 200ms, is waited. Afterwards, the process proceeds to the step of determining whether the voltage across each of the three relays is smaller than the first predetermined voltage or greater than the second predetermined voltage.

Figure 1 shows a schematic structural diagram of a system of a charging pile comprises a conventional three-phase AC contactor. The three-phase AC contactor is bulky and hence occupies much space in the charging pile, and is expensive and hence reduces a profit of the charging pile. Moreover, three-phase electric connection of an input side, three-phase electric connection of an output side, and communication connection to the CCU module need to be separately implemented. The excessive connection requires more prefabricated cables, and renders the wiring in the charging pile complicated.

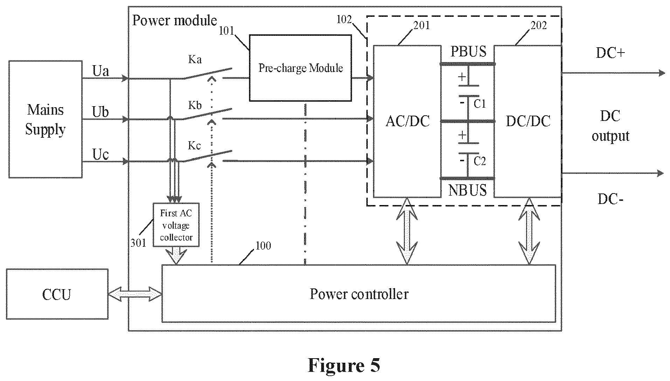

In view of the above, a power module is provided according to an embodiment of the present disclosure. As shown in Figure 5, the power module comprises a power controller 100, a pre-charger 101, a converting circuit 102, a first AC voltage collector 301, and three relays Ka, Kb, and Kc which correspond to three phases.

An input of each of the three relays Ka, Kb, and Kc is connected to an input interface, for the corresponding phase, of the power module. Thereby, each of the relays Ka, Kb, and Kc can receive a mains supply via the corresponding input interface.

An output of each of the three relays Ka, Kb, and Kc is connected to an input of the converting circuit 102 via the pre-charger 101. As shown in Figure 5, the converting circuit 102 may comprise an alternating-current-to-direct-current (AC/DC) circuit 201 and at least one direct-current-to-direct-current (DC/DC) circuit 202. An AC side of the AC/DC circuit 201 serves as the input of the converting circuit 102. An DC side of the AC/DC circuit 201 is connected to an input of the DC/DC circuit 202 via a DC bus (of which a positive line and a negative line are denoted as PBUS and NBUS, respectively, as shown in Figure 5). A bus capacitor (comprising C1 and C2 as shown in Figure 5), which may have a large capacitance, is connected between the positive and negative lines of the DC bus. An output of the DC/DC circuit 202 serves as an output of the converting circuit 102. The AC/DC circuit 201 is configured to convert input AC power into stable DC power and adjust a power factor for the input power. The DC/DC circuit 202 is configured to output a DC voltage having different voltage levels. The pre-charger 101 is mainly configured to limit a charging current of the bus capacitor when the system is powered on.

The output of the converting circuit 102 is connected to an output interface of the power module. In the system of the power charger, the output interface of the power module is connected to an input of a charging gun, for charging an external device.

The first AC voltage collector 301 is configured collect acquire samples of an input voltage of the three relays Ka, Kb and Kc, and output the samples of the input voltage to the power controller 100.

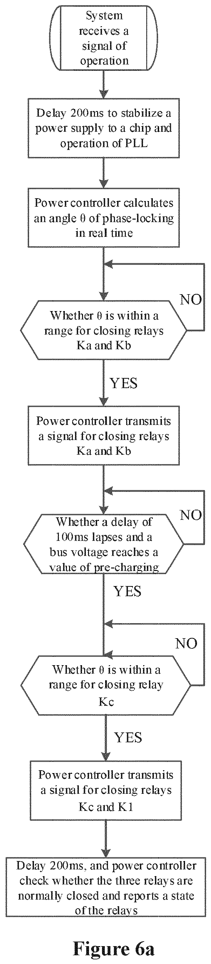

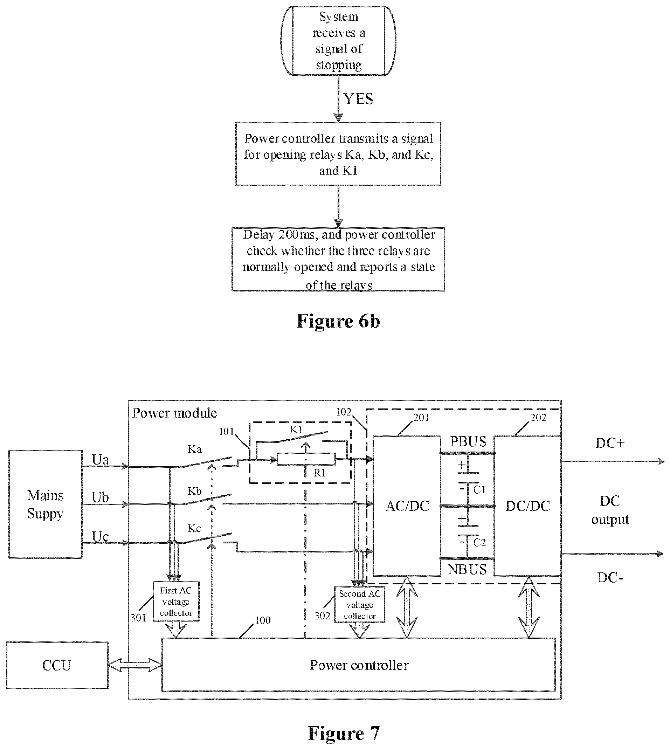

The pre-charger 101, the converting circuit 102, and the three relays Ka, Kb and Kc are controlled by the power controller 100. The power controller 100 is configured to implement the method for controlling the power module in any foregoing embodiment. Figures 6a and 6b show an entire example of such method. A principle and a process of operation of the example may refer to the foregoing embodiment, and are not repeated herein.

Herein the time instance at which a relay is closed is accurately controlled to put a strict limitation on the impulse current. Hence, a service life of the system can be prolonged.

Moreover, the power module according to embodiments of the present disclosure comprises the three relays Ka, Kb, and Kc which are controlled by the power controller 100. That is, each relay Ka, Kb and Kc is provided inside the power module, which saves the three-phase electric connection between input and output terminals of the convention three-phase AC contactor and an external device. Moreover, direct control of the power controller 100 inside the power module saves communication connections between the relays and the CCU module, which leads to fewer cables connected to the CCU module. Hence, a quantity of cables is reduced, and internal connections of the charging pile are simplified, which simplifies wiring. The three-phase AC contactor outside the power module in conventional can be removed, and hence the problem of bulky and costly three-phase AC contactor is addressed.

Compared with the conventional system structure, herein the conventional three-phase AC contactor having the arc quenching device is replaced with three small relays Ka, Kb and Kc. The three relays are integrated into the power module, and each relay is opened and closed by the power controller 100 which implements the method in the foregoing embodiments. Thereby, the impulse current can be decreased and the contact adhesion can be avoided by using the method without help of the arc quenching device. The power module can be miniaturized and modularized.

In an embodiment as shown in Figure 7, the pre-charger 101 merely comprises a pre-charge resistor R1 and a pre-charge switch K1. The pre-charge resistor R1 and the pre-charge switch K1 are connected in parallel between the input of one of the three relays (where the relay corresponding to phase A is taken as an example in Figure 7) and the corresponding port of the input of the converting circuit 102. The pre-charge switch K1 may be a relay controlled by the power controller 100.

Figure 7 is further taken as an example for illustration. The power controller 100 may control a sequence of closing the relays Ka, Kb, and Kc and control time instances of closing the relays Ka, Kb, and Kc. Thereby, the relays Ka and Kb corresponding to phase A and phase B, respectively, may be closed when the line voltage Uab between these two phases approximates zero. The line voltage Uab pre-charges the bus capacitor via the resistor R1 and the AC/DC circuit 201. The pre-charge resistor R1 is capable to avoid a risk of damaging the system to a large impulse current.

Moreover, after the pre-charging of the bus capacitor is completed, the power controller 100 closes the pre-charge switch K1 and the remaining relay Kc simultaneously. The remaining relay Kc is closed to finish the normal coupling of the three-phase AC voltage, and the charging switch K1 is closed to short-circuit the pre-charge resistor R1, such that power consumption of the normal operation is reduced. In comparison with conventional technology, one pre-charge relay and its corresponding pre-charge resistor can be saved, and thereby a cost is reduced.

On the basis of the foregoing embodiments, as shown in Figure 7, the power module may further comprise a second AC voltage collector 302. The second AC voltage collector 302 is configured to acquire samples of an AC input voltage of the converting circuit 102 (i.e., samples of an AC voltage at the input of the converting circuit 102), and output the samples to the power controller 100.

As shown in Figure 7, both the first AC voltage collector 301 and the second AC voltage collector 302 are provided in the power module. The power controller 100 may obtain a difference between voltages at two terminals of each relay via these two AC voltage collectors. When closing each relay under control, it is determined that such relay is normally closed in a case that the difference is less than a first predetermined voltage, such as 5V, and it is determined that such relay is not normally closed in a case that the difference is greater than a second predetermined voltage, such as 100 V. When the power controller 100 transmits a signal for opening the three relays, each relay is determined to be not normally opened in a case that the difference between voltages at two terminals of such relay is less than a first predetermined voltage, such as 5V, and is determined to be normally opened in a case that the difference between voltages at two terminals of such relay is greater than a second predetermined voltage, such as 100 V.

In an embodiment, after the power controller 100 transmits a signal for closing the three relays Ka, Kb and Kc, the first AC voltage collector 301 may sample the input voltage of the three phases, i.e., *U*_{*a*1}, *U*_{*b*1}, and *U*_{*c*1}, and calculate the effective phase voltages, i.e., *U*_{*a*1*RMS*}, *U*_{*b*1*RMS*}, and *U*_{*c*1*RMS*}. The second AC voltage collector 302 may sample the AC input voltage of the three phases, i.e., *U*_{*a*2}, *U*_{*b*2}, and *U*_{*c*2}, and calculate the effective phase voltages, i.e., *U*_{*a*2*RMS*}, *U*_{*b*2*RMS*}, and *U*_{*c*2*RMS*}. In a case that the difference of the effective voltages for phase A is within 5V, i.e., |*U*_{*a*1*RMS*} - *U*_{*a*2*RMS*}| < 5, it may be determined that the relay Ka corresponding to the phase A is normally closed. In a case that a result of subtracting the effective voltage obtained by the second AC voltage collector 302 for phase A from the effective voltage obtained by the first AC voltage collector 301 for phase A is greater than 100V, i.e., *U*_{*a*1*RMS*} - *U*_{*a*2*RMS*} > 100, it may indicate that the relay Ka corresponding to phase A is not closed due to a fault.

Similarly, the phase voltages concerning the other two phases can be determined based on the foregoing logic, so as to detect whether a corresponding relay is not closed due to a fault.

After the power controller 100 transmits a signal for opening the three relays Ka, Kb, and Kc, the two AC voltage collectors acquire and calculate the new effective phase voltages for the three phases. It can be detected whether the three relays are normally opened according to the foregoing logic, of which details are not repeated herein.

The above determination of the power controller 100 can detect accurately whether each relay has a fault under different conditions, and report the fault an upper computer via a communication port. Thereby, intelligent fault diagnosis is achieved.

The power module provided in embodiments of the present disclosure is advantageous in miniaturization, modularization, a low cost, and less wiring. Moreover, the power module is capable to detect a fault in closing and opening the relay corresponding to each phase, and report the detected fault in time, which improves a degree of automation of the power module.

A charging pile is further provided according to an embodiment of the present disclosure. Reference is made to Figure 5 and Figure 7. The charging pile comprises a CCU, at least one charging gun (not depicted), and any power module according to foregoing embodiments.

An input interface of the power module is configured to receive power from a mains supply, and an output interface of the power module is connected to an input of the charging gun.

The CCU is configured to communicate with the power controller in the power module.

During an initial power-up, the charging pile closes the three relays Ka, Kb, and Kc corresponding to three phases in its power module at different times according to a sequence, so as to suppress an impulse current. A structure shown in Figure 7 is taken as an example. The power controller 100 first transmits an instruction for closing the relays Ka and Kb simultaneously, and thereby the capacitor on the DC bus is charged from phases A and B via the pre-charge resistor R1. After the charging of the bus capacitor is completed, the power controller 100 transmits an instruction for closing of the relay Kc and the pre-charge switch K1, and thereby the phase voltage of phase C is connected and the pre-charge resistor R1 is short-circuited.

Herein on the basis of miniaturization, modularization, less wiring and a low cost of the power module, a sequence and times instances of closing the relays of the three phases are controlled. Generation of a large impulse current can be completely avoided, and hence a risk of damaging the system is reduced.

Conventional three-phase AC contactors are bulky, heavy, and not capable of being integrated into power modules. These AC contactors require a lot of cables for connection, which increases spatial complexity and manufacture complexity of the system. In comparison, the charging pile according to embodiments of the present disclosure adopts an improved power module, in which three small internal relays are integrated without additional cable. Thereby, manufacture process is simplified, production efficiency is improved, a hardware cost and a weight of the device are reduced, and an internal space of the system is saved. Moreover, the fault detection is enabled, which improves a degree of intelligence and facilitates later maintenance.

The embodiments of the present disclosure are described in a progressive manner, and each embodiment places emphasis on the difference from other embodiments. Therefore, one embodiment can refer to other embodiments for the same or similar parts. Since the power modules and the charging piles disclosed in the embodiments corresponds to the methods disclosed in the embodiments, the description of the power modules and the charging piles is simple, and reference may be made to the relevant part of the methods. The he power modules and the charging piles as described above are only illustrative. The units described as separate components may or may not be physically separated, and the components shown as units may or may not be physical units, that is, they may be located in one place or may be distributed among multiple network elements. A part or all of the modules may be selected according to an actual requirement to achieve an object of an embodiment of the present disclosure. Those skilled the art can appreciate a manner of implementation of such embodiment without an creative effort.

As further be appreciated by those skilled in the art, the units and algorithmic steps in the examples described according to the embodiments disclosed herein can be implemented in forms of electronic hardware, computer software or the combination of the both. To illustrate the interchangeability of the hardware and the software clearly, the components and the steps in the examples are described generally according to functions in the above description. Whether hardware or software is used to implement the functions depends on a specific application and design constraints for the technical solution. For each specific application, different methods may be used by those skilled in the art to implement the described function, and such implementation should not be considered to depart from the scope of this invention.

According to the description of the disclosed embodiments, those skilled in the art can implement or use the present disclosure through, for example, interchanging or combining features in theses embodiments. Various modifications made to these embodiments may be obvious to those skilled in the art, and the general principle defined herein may be implemented in other embodiments without departing from the spirit or scope of the present disclosure. Therefore, the present disclosure is not limited to the embodiments described herein but conforms to a widest scope in accordance with principles and novel features disclosed in the present disclosure.

## Claims

1. A method for controlling a power module, comprising:
acquiring, in response to receiving a signal of operation, samples of an input voltage of three relays which correspond to three phases, respectively, at an input of a power module;
determining, according to the samples of the input voltage, whether a line voltage is within a predetermined voltage range comprising zero voltage, wherein the line voltage is between inputs of two relays of the three relays; and
closing the two relays to pre-charge a bus capacitor in a converting circuity of the power module, in response to determining that the line voltage is within the predetermined voltage range.

2. The method according to claim 1, wherein:
an output of a first relay of the three relays is connected to a corresponding port of an input of the converting circuit via a pre-charge resistor;
outputs of a second relay and a third relay of the three relays are directly connected to corresponding ports, respectively, of the input of the converting circuit; and
determining whether the line voltage is within the predetermined voltage range comprises:
determining whether the line voltage between an input of the first relay and an input of the second relay is within the predetermined voltage range.

3. The method according to claim 1, wherein after closing the two relays, the method further comprises:
closing a remaining relay, which is other than the two relays, among the three relays and a pre-charge switch, which is connected in parallel with the pre-charge resistor, in response to pre-charging on the bus capacitor being completed.

4. The method according to claim 3, wherein closing the remaining relay and the pre-charge switch comprises:
determining, according to the samples of the input voltage, whether a phase voltage at an input of the remaining relay is within the predetermined voltage range; and
closing the remaining relay and the pre-charge switch, in response to determining that the phase voltage is within the predetermined voltage range.

5. The method according to claim 3, wherein after closing the two relays, the method further comprises:
waiting for a first predetermined period in which the pre-charging on the bus capacitor is completed.

6. The method according to any one of claims 3 to 5, wherein after closing the third relay and the pre-charge switch, the method further comprises:
determining, according to the samples of the input voltage and samples of an alternating-current (AC) input voltage of the converting circuit, whether a voltage across each of the three relays is smaller than a first predetermined voltage or greater than a second predetermined voltage, wherein the second predetermined voltage is greater than the first predetermined voltage; and
for each of the three relays,
determining said relay is normally closed in response to the voltage being smaller than the first predetermined voltage, and
determining said relay is not normally closed in response to the voltage being greater than the second predetermined voltage.

7. The method according to claim 1, wherein after receiving the signal of operation and before acquiring the samples of the input voltage, the method further comprises:
waiting for a second predetermined period to stabilize power supplied to a power controller in the power module and stabilize operation of a phase-locked loop in the power controller.

8. The method according to claim 6, wherein after closing the third relay and the pre-charge switch and before determining whether the voltage is smaller than the first predetermined voltage or greater than the second predetermined voltage, the method further comprises:
waiting for a third predetermined period.

9. The method according to any one of claims 1 to 5, and 7, further comprising:
opening each of the three relays and the pre-charge switch, in response to receiving a signal of stopping.

10. The method according to claim 9, wherein after opening each of the three relays and the pre-charge switch, the method further comprises:
determining, according to the samples of the input voltage and samples of an AC input voltage of the converting circuit, whether a voltage across each of the three relays is smaller than a first predetermined voltage or greater than a second predetermined voltage, wherein the second predetermined voltage is greater than the first predetermined voltage; and
for each of the three relays,
determining said relay is normally opened in response to the voltage being greater than the second predetermined voltage, and
determining said relay is not normally opened in response to the voltage being smaller than the first predetermined voltage.

11. A power module, comprising:
a power controller, a pre-charger, a converting circuit, a first AC voltage collector, and three relays corresponding to three phases, respectively,
wherein:
an input of each of the three relays is connected to an input interface for the corresponding phase of the power module;
an output of each of the three relays is connected to an input of the converting circuit via the pre-charger;
an output of the converting circuit is connected to an output interface of the power module;
the first AC voltage collector is configured acquire samples of an input voltage of the three relays, and output the samples of the input voltage to the power controller;
the pre-charger, the converting circuit, and the three relays are controlled by the power controller; and
the power controller is configured to implement the method according to any one of claims 1 to 10.

12. The power module according to claim 11, wherein:
the pre-charger comprises a pre-charge resistor and a pre-charge switch, and
the pre-charge resistor and the pre-charge switch are connected in parallel between one of the three phases and a corresponding port of the input of the converting circuit.

13. The power module according to claim 11, further comprising:
a second AC voltage collector, configured to acquire samples of an alternating-current (AC) voltage at the input of the converting circuit, and output the samples of the AC voltage to the power controller.

14. The power module according to any one of claims 11 to 13, wherein:
the converting circuit comprises an alternating-current-to-direct-current (AC/DC) circuit and at least one direct-current-to-direct-current (DC/DC) circuit;
an AC side of the AC/DC circuit serves as the input of the converting circuit;
the AC/DC circuit is connected to an input of the at least one DC/DC circuit via a direct current bus;
a bus capacitor is connected between a positive line and a negative line of the DC bus;
and
an output of the at least one DC/DC circuit serves as the output of the converting circuit.

15. A charging pile, comprising:
a communication control unit (CCU);
at least one charging gun; and
the power module according to any one of claims 12 to 15, wherein:
the input interface of the power module is configured to receive power from a mains supply;
the output interface of the power module is connected to an input of the charging gun;
and
the CCU is configured to communicate with the power controller in the power module.
